# EUROPÄISCHE PATENTANMELDUNG

(11) **EP 0 827 369 A1**
(43) Veröffentlichungstag der Anmeldung: **04.03.1998**
(21) Anmeldenummer: 97113710.4
(22) Anmeldetag: 07.08.1997
(51) Int. Cl.: H05B 39/00, H05B 39/08

(54) **Energiesparvorrichtung für elektrische Lampen, insbesondere Glühlampen**

(30) Priorität: 02.09.1996 DE 29615264 U
(71) Anmelder: Haas, Peter F., 86938 Schondorf (DE); Dorazil, Alois Karl, 10829 Berlin (DE)
(72) Erfinder: Haas, Peter F., 86938 Schondorf (DE); Dorazil, Alois Karl, 10829 Berlin (DE)
(74) Vertreter: Kurig, Thomas, Dr. Dipl.-Phys.

(57) **Zusammenfassung**

Offenbart wird eine Energiesparvorrichtung für elektrische Lampen, insbesondere Glühlampen, mit einem Gewindeabschnitt zum Einsatz in eine herkömmliche Lampenfassung und einem Fassungsabschnitt zur Aufnahme der Glühlampe, wobei die Vorrichtung eine Spannungsverminderungsschaltung enthält.

## Beschreibung

Die vorliegende Erfindung betrifft eine Energiesparvorrichtung für elektrische Lampen, insbesondere Glühlampen und ist geeignet zum Einsatz in herkömmliche Lampenfassungen.

Glühlampen haben eine von der Netzspannungscharakteristik abhängige statistisch gemittelte Lebensdauer. Angaben über diese Lebensdauer sind bei allen Lampenherstellern verfügbar. Sie beträgt beispielsweise 750 Stunden. Diese Lebensdauer ist gegenüber der Lebensdauer anderer elektrischer Verbraucher gering und begründet den Bedarf nach Glühlampen, die eine wesentlich längere Lebensdauer haben. Die Glühlampenhersteller sind aus betriebswirtschaftlichen Gründen nicht bereit, die Lebensdauer der von Ihnen angebotenen Glühlampen wesentlich zu erhöhen.

Gleichzeitig haben Glühlampen einen von ihrer Leistungsaufnahme abhängigen Stromverbrauch, der summiert über sämtliche Glühlampen eines Haushaltes erheblich ist. Da nur ein geringer Anteil der verbrauchten Energie in Licht, d.h. sichtbare elektromagnetische Strahlung, umgesetzt wird, besteht Bedarf nach Glühlampen, deren Leistungsaufnahme bei wenig oder nicht geschwächter optischer Leistung verringert ist.

Es sind bereits Dimmer bekannt, die in das Anschlußkabel bzw. die Anschlußleitung eines Verbrauchers geschaltet sind. Der nachträgliche Einbau ist kompliziert, und der Dimmer ist nicht variabel einsetzbar.

Aufgabe der vorliegenden Erfindung ist daher die Angabe einer Energiesparvorrichtung für elektrische Lampen, insbesondere Glühlampen, die den elektrischen Energieverbrauch von Glühlampen ohne Einbuße bei der physiologisch wahrnehmbaren Lichtleistung verringert. Eine derartige Energiesparvorrichtung für elektrische Lampen, insbesondere für Glühlampen ist Gegenstand des Anspruchs 1.

Es wurde erkannt, daß eine Verringerung der Spannung die Lebensdauer der verwendeten Glühlampe beträchtlich erhöht. Dabei wird gleichzeitig die Leistungsaufnahme der Glühlampe reduziert. Wenn die an die Glühlampe angelegte Spannung gesenkt wird, wird sowohl die Leistungsaufnahme als auch die Lichtausbeute verringert. Trotz verringerter Lichtausbeute ist jedoch die Abnahme der Leuchtkraft physiologisch vernachlässigbar. Ferner ist das Emissionsspektrum des Glühdrahts zur Farbe "Rot" hin verschoben, was von vielen Personen als angenehm empfunden wird. Die Glühlampe hat mit der erfindungsgemäßen Energiesparvorrichtung einen wärmeren Farbton. Die Lebensdauer des Glühfadens ist erhöht aufgrund der Verringerung der für den Verschleiß verantwortlichen Spannungsspitzen.

Es ist bevorzugt, daß die Spannungsverringerungsschaltung eine an ihrem Eingang angelegte Wechselspannung derart modifiziert an ihrem Ausgang bereitstellt, daß deren Amplitude vermindert ist. Der Amplitudenbetrag hat unmittelbar Einfluß auf den Verschleiß des Glühfadens.

Es ist bevorzugt, daß die Spannungsverminderungsschaltung den Effektivwert der von ihr bereitgestellten Wechselspannung vermindert. Der Effektivwert der Lampenspannung ist verantwortlich für die in einen ohmschen Widerstand umgesetzte Leistung und bestimmt daher die Leistungsaufnahme. Durch Verringerung des Effektivwertes ist auch die Leistungsaufnahme verringert.

Es ist bevorzugt, daß die Spannungsverminderungsschaltung die Amplitude der angelegten Wechselspannung auf etwa 210 bis 219 V, besonders bevorzugt etwa 217 V begrenzt. Bei derartigen Amplitudengrenzen sind günstige Energieeinsparungen ohne wesentlichen Helligkeitsverlust beobachtet worden. Die Lebensdauer ist damit um mindestens den Faktor 30 erhöht, d.h. sie beträgt mindestens 22500 Stunden.

Die Leistungsaufnahme der angeschlossenen Glühlampe ist im Betrieb um etwa 5 % bis 20 %, bevorzugt etwa 7 % bis 15 % gesenkt, was den Stromverbrauch bei vielen Verbrauchern erheblich senkt.

Die Spannungsverminderungsschaltung weist bevorzugt ein Halbleiterbauelement auf, das den Kern der Spannungsverminderungsschaltung bildet.

Um die Rückwirkung von durch das Halbleiterbauelement erzeugter Störspannungsanteile in das Stromversorgungsnetz zu verhindern, ist bevorzugt ein L/C-Filter vorgesehen, welches eine geeignete Stördämpfung gewährleistet. Die Stördämpfung ist relativ unabhängig von der Impedanz der Lampe und insbesondere unabhängig von der Hochfrequenz-Impedanz des Netzanschlusses. Das L/C-Filter vermindert insbesondere die Rückwirkung von Impulsflanken mit Steilheiten im Bereich von 100 Nanosekunden und die damit verbundenen Funkstörspannungen.

Das Halbleiterbauelement verzögert bevorzugt in jeder Halbwelle der Wechselspannung die Stromwelle. Dadurch wird der Lampenstrom in jeder Halbwelle der Netzspannung verzögert eingeschaltet, der Effektivwert der Lampenspannung sinkt, und insbesondere beim Polaritätswechsel von Plus auf Minus bzw. umgekehrt ist eine Ruheperiode vorhanden, die den Verschleiß des Glühfadens weiter verringert.

Das Halbleiterbauelement ist besonders bevorzugt ein SIDAC, der von der Firma Motorola angeboten wird.

Alternativ ist das Bauelement eine Diode, wodurch die Lampenspannung etwa auf die Hälfte reduziert wird und die Lebensdauer erheblich ansteigt. Wegen der unsymmetrischen Netzspannungsbelastung ist diese Anordnung jedoch nur für eine geringe Lampenleistung sinnvoll und auf Glühlampen mit geringer Leistungsaufnahme beschränkt.

Das Filter enthält besonders bevorzugt lediglich einen Kondensator. Diese Ausführungsform ist dann erwünscht, wenn nur geringe Störspannungen durch das Halbleiterbauelement entstehen. Dies ist insbesondere bei Verwendung einer Diode der Fall.

Bevorzugt entspricht der Gewindeabschnitt der Energiesparvorrichtung einem Gewindeteil der Glühlampe. Auf diese Weise kann die Energiesparvorrichtung anstelle der Glühlampe in eine herkömmliche Lampenfassung eingeschraubt bzw. eingesetzt werden. Ferner ist der Gewindeabschnitt mit Anschlüssen für zwei Leiter versehen, die an die Spannungsverminderungsschaltung angeschlossen sind, und der Fassungsabschnitt weist zwei Anschlußkontakte für die Glühlampe auf, die ebenfalls mit der Spannungsverminderungsschaltung verbunden sind. Dadurch ist eine bequeme und kompakte Anordnung erreicht.

Der Fassungsabschnitt ist an einem Ende im Querschnitt konisch erweitert, um die sich erweiternde Birne der Glühlampe aufzunehmen.

Bevorzugt ist die Spannungsverminderungsschaltung innerhalb des Gewindeabschnitts angeordnet. Die Spannungsverminderungsschaltung ist miniaturisiert und mit derart geringem Platzbedarf ausgestattet, daß sie in den Gewindeabschnitt eingepaßt bzw. integriert werden kann.

Der Gewindeabschnitt und der Fassungsabschnitt sind bevorzugt zusammensteckbar bzw. miteinander verbindbar. Auf diese Weise sind Gewindeabschnitt, Fassungsabschnitt und Spannungsverminderungsschaltunggegeneinander fixiert und lagestabil.

Weitere Vorteile, Merkmale und Anwendungsmöglichkeiten der vorliegenden Erfindung ergeben sich aus der nachfolgenden Beschreibung von bevorzugten Ausführungsbeispielen in Verbindung mit der Zeichnung.

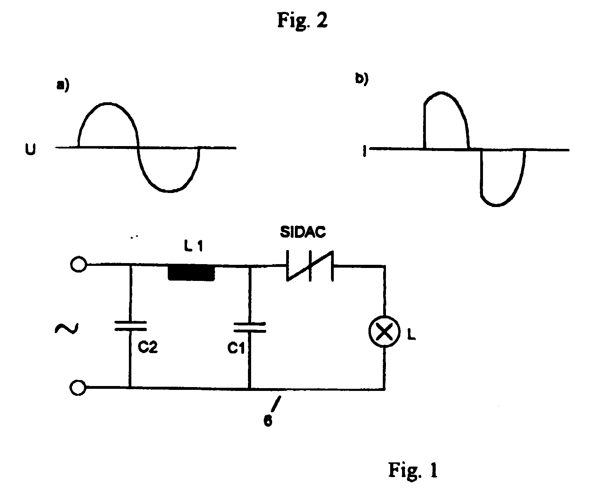

Fig. 1 zeigt eine Prinzipskizze der in der Energiesparvorrichtung verwendeten Spannungsverminderungsschaltung.

jFig. 2a) zeigt den Spannungsverlauf am Eingang der Spannungsverminderungsschaltung gemäß Fig. 1.

Fig. 2b) zeigt den Stromverlauf am Ausgang der Spannungsverminderungsschaltung gemäß Fig. 1.

Fig. 3 zeigt ein anderes Ausführungsbeispiel einer Spannungsverminderungsschaltung.

Fig. 4a) zeigt den Spannungsverlauf am Eingang der Spannungsverminderungsschaltung von Fig. 3.

Fig. 4b) zeigt den Strom am Ausgang der Spannungsverminderungsschaltung von Fig. 3.

Fig. 5 zeigt einen Querschnitt durch ein Ausführungsbeispiel der Energiesparvorrichtung im konstruktiven Detail.

Fig. 6 zeigt ein weiteres Ausführungsbeispiel der Energiesparvorrichtung im konstruktiven Detail.

Die in Fig. 1 im Prinzip gezeigte Schaltskizze zeigt zwei Anschlüsse einer Spannungsverminderungsschaltung 6 zum Anschluß an ein Wechselspannungsnetz, welche ein aus zwei parallel geschalteten Kondensatoren C1, C2 und einer dazwischen in Reihe geschalteten Spule L1 bestehendes L/C-Filter sowie ein daran angeschlossenes Halbleiterbauelement in Form eines SIDAC zur Verringerung von Effektivwert und Amplitude der angelegten Wechselspannung aufweist, sowie schließlich einen Verbraucher in Form einer Glühlampe L. Das Element SIDAC und die Glühlampe sind in Reihe geschaltet. Die aufgrund dieser Skizze gebildete Spannungsverminderungsschaltung arbeitet nach dem Prinzip der Phasenanschnittsteuerung und begrenzt die Netzspannung auf maximal 218 V (Wechselspannung). Dadurch wird der Glühfaden geringer belastet, und aufgrund der geringeren Glühfadentemperatur wandert der Spektralanteil des Lichtes vom blauen in den roten Bereich, was die Helligkeit geringfügig senkt. Dieser Effekt ist jedoch physiologisch vernachlässigbar. Aufgrund der Phasenanschnittsteuerung und der Netzspannungsbegrenzung ist die Leistungsaufnahme und dadurch der Verbrauch um etwa 10 % verringert.

Fig. 2a) zeigt die Spannung am Eingang der Spannungsverminderungsschaltung von Fig. 1. Es ist ein sinusförmiger Verlauf zu erkennen. Fig. 2b) zeigt die Stromwelle am Ausgang der Spannungsverminderungsschaltung. Es ist deutlich zu erkennen, daß bei jeder Halbwelle der Spannung die Stromwelle verzögert ist, so daß beim Polaritätswechsel eine kurze Ruhedauer, d.h. verschwindender Stromfluß zu erkennen ist. Insbesondere durch diese Ruhedauer wird der Verschleiß des Glühfadens herabgesetzt.

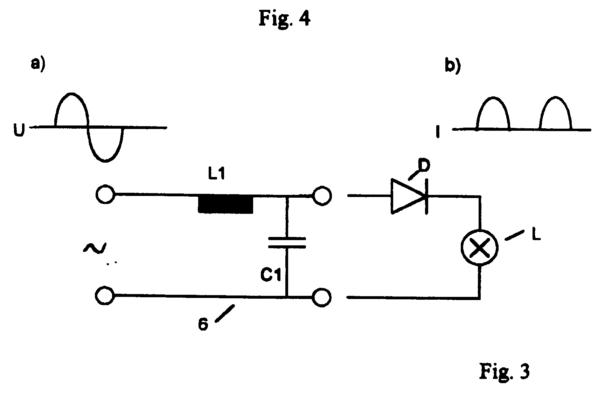

Fig. 3 zeigt eine alternative Ausführungsform in Form einer Spannungsverminderungsschaltung 6'. Anstelle des SIDAC ist eingesetzt eine Diode D, die jeweils nur die positive Halbwelle der Spannung durchläßt. Dadurch ist der Effektivwert der Spannung etwa vermindert auf die Hälfte und auch das Störspannungspotential deutlich gemindert. Aus diesem Grunde ist als Filter lediglich eine Spule L und ein parallel geschalteter Kondensator C1 vorgesehen. Prinzipiell würde der Kondensator C1 genügen.

Fig. 4a) zeigt die Spannung am Eingang der Spannungsverminderungsschaltung 6' mit sinusförmigem Verlauf. Fig. 4b) zeigt den Strom am Ausgang der Spannungsverminderungsschaltung 6', wobei deutlich nur die durchgelassene positive Halbwelle zu erkennen ist.

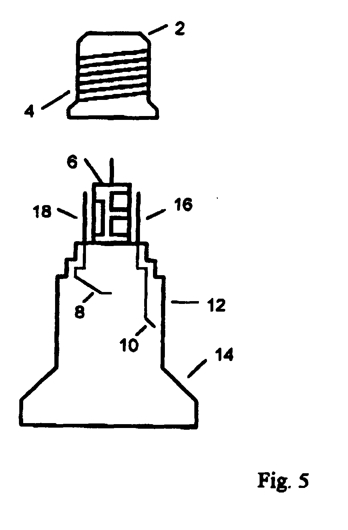

Fig. 5 zeigt im Schnitt ein Ausführungsbeispiel einer Energiesparvorrichtung für elektrische Lampen, insbesondere Glühlampen. Die Vorrichtung weist auf einen Gewindeabschnitt 2, der ein mit einer bestimmten Steigung vorgesehenes Gewinde 4 aufweist. Der Gewindeabschnitt entspricht etwa dem Gewindeabschnitt einer herkömmlichen Glühlampe und ist zum Einsatz in eine gewöhnliche herkömmliche Lampenfassung E14 bestimmt. Der Gewindeabschnitt 2 besteht bevorzugt aus Messing oder Aluminium. Ferner ist gezeigt ein Fassungsabschnitt 12 mit einem sich trompetenförmig bzw. konisch erweiternden äußeren Abschnitt 14. Der Fassungsabschnitt 12 besteht aus Kunststoff und enthält ein innenliegendes Gewindeteil aus Kunststoff für 40W bis 60W Glühlampen E14, die in dem Fassungsabschnitt 12 aufnehmbar sind. Zwischen Fassungsabschnitt 12 und Gewindeabschnitt 2 ist eine Spannungsverminderungsschaltung 6 angeordnet, die (nicht gezeigt] eine Leiterplatte, eine Ferritspule L1, zwei Hochvolt-Keramikkondensatoren C1, C2 sowie ein SIDAC aufweist. In dem Fassungsabschnitt 12 sind zwei Messingkontakte mit Leitern 8, 10 gebildet, die mit der Spannungsverminderungsschaltung 6 in Verbindung stehen. Die Spannungsverminderungsschaltung ihrerseits steht in Verbindung mit dem Gewinde 4 des Gewindeabschnitts 2 und einem oben liegenden (nicht gezeigten) Kontaktpunkt. Die Spannungsverminderungsschaltung 6 ist in dem Gewindeabschnitt 2 vollständig integriert. Der Gewindeabschnitt 2 und der Fassungsabschnitt 12 sind ineinander steckbar und in zusammengesteckter Position durch ein Verbindungsmittel, z.B. Klebstoff, miteinander verbunden. Der sich konisch erweiternde Abschnitt 14 grenzt nach außen an einen zylindrischen Abschnitt konstanten Durchmessers und nach innen an einen zylindrischen Abschnitt mit einem konstanten Durchmesser, der gegenüber dem Durchmesser des äußeren zylindrischen Abschnitts kleiner ist. In diesem zylindrischen Abschnitt mit kleinerem Durchmesser ist auch der innenliegende aus Kunststoff gebildete Gewindeteil des Fassungsabschnitts 12 gebildet.

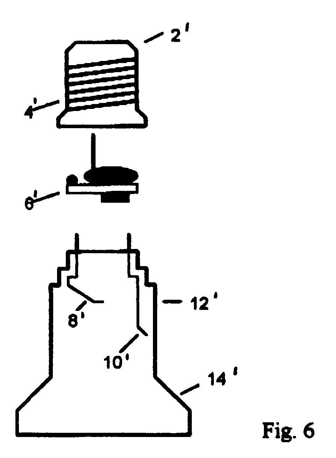

Fig. 6 zeigt eine alternative Ausführungsform einer Energiesparvorrichtung für elektrische Glühlampen gemäß der Erfindung. Es ist ebenfalls ein Gewindeabschnitt 2' mit Gewinde 4' vorgesehen sowie ein Fassungsabschnitt 12' mit konischem Ende 14'. Zwischen Gewindeabschnitt 2' und Fassungsabschnitt 12' ist eine Spannungsverminderungsschaltung 6' vorgesehen, die (nicht gezeigt) eine Leiterplatte, eine Ferritspule L1, einen Hochvolt-Keramikkondensator C1 sowie eine Diode aufweist. Der Gewindeabschnitt 2' besteht aus Messing oder Aluminium und hat ein Gewinde 4' für Lampenfassungen E27. Der Fassungsabschnitt 12 ist aus Kunststoff gebildet mit einem Gewindeteil aus Kunststoff für 60W bis 150W Glühlampen E27. Die Messingkontakte 8' und 10' führen zu der Spannungsverminderungsschaltung 6', die wiederum mit dem Gewindeteil 4' und einem oben liegenden (nicht gezeigten) Kontaktpunkt des Gewindeabschnitts 2' in Verbindung steht. An den konischen Endabschnitt 14' grenzt auch in dieser Ausführungsform ein äußerer zylindrischer Abschnitt mit konstantem Durchmesser und ein innerer zylindrischer Abschnitt konstanten kleineren Durchmessers. In diesem inneren zylindrischen Abschnitt ist der Gewindeteil (nicht gezeigt) des Fassungsabschnitts 12' gebildet. Der Gewindeabschnitt 2' und der Fassungsabschnitt 12' sind miteinander verbindbar durch Steckverbindung und in dem zusammengesteckten Zustand miteinander durch ein Verbindungsmittel verbunden.

Die Spannungsverminderungsschaltung 6' bzw. 6 ist jeweils auf einer Leiterplatte montiert und paßt entsprechend in den Gewindeabschnitt der Energiesparvorrichtung, die einer E14 bzw. E27 Glühbirnenfassung entspricht. Zum Betrieb der erfindungsgemäßen Sparvorrichtung wird der Gewindeabschnitt 2, 2' der Energiesparvorrichtung in eine konventionelle mit Strom versorgte Lampenfassung bzw. Glühlampenfassung eingeschraubt. Anschließend schraubt man die Glühlampe in den Fassungsabschnitt 12 bzw. 12' der Energiesparvorrichtung. Die Energiesparvorrichtung kann somit in der Form eines Adapters verwendet werden.

## Patentansprüche

1. Energiesparvorrichtung für elektrische Lampen, insbesondere Glühlampen (L), mit einem Gewindeabschnitt (2, 4) zum Einsatz in eine herkömmliche Lampenfassung und einem Fassungsabschnitt (12, 14) zur Aufnahme der Glühlampe (L), wobei die Vorrichtung eine Spannungsverminderungsschaltung (6, 6') enthält.

2. Energiesparvorrichtung nach Anspruch 1, dadurch gekennzeichnet, daß die Spannungsverminderungsschaltung (6, 6') eine an ihrem Eingang angelegte Wechselspannung derart modifiziert an ihrem Ausgang bereitstellt, daß deren Amplitude vermindert ist.

3. Energiesparvorrichtung nach Anspruch 1 oder 2, dadurch gekennzeichnet, daß die Spannungsverminderungsschaltung den Effektivwert der an die Glühlampe (L) anzulegenden Wechselspannung vermindert.

4. Energiesparvorrichtung nach Anspruch 2, dadurch gekennzeichnet, daß die Spannungsverminderungsschaltung (6, 6') die Amplitude der angelegten Spannung auf maximal 210 Volt bis 219 Volt, bevorzugt etwa 217 Volt begrenzt.

5. Energiesparvorrichtung nach einem der vorhergehenden Ansprüche, dadurch gekennzeichnet, daß die Leistungsaufnahme der angeschlossenen Glühlampe im Betrieb um 5 % bis 20 %, vorzugsweise um etwa 7 % bis etwa 15 % gegenüber einer Anordnung ohne Energiesparvorrichtung gesenkt ist.

6. Energiesparvorrichtung nach einem der vorhergehenden Ansprüche, dadurch gekennzeichnet, daß die Spannungsverminderungsschaltung (6, 6') ein Halbleiterbauelement (SIDAC; D) aufweist.

7. Energiesparvorrichtung nach einem der vorhergehenden Ansprüche, dadurch gekennzeichnet, daß die Spannungsverminderungsschaltung (6, 6') ein Filter, vorzugsweise ein L/C-Filter (C1, C2, L1) aufweist.

8. Energiesparvorrichtung nach Anspruch 6, dadurch gekennzeichnet, daß das Halbleiterbauelement (SIDAC; D) in jeder Halbwelle der Wechselspannung die Stromwelle verzögert.

9. Energiesparvorrichtung nach Anspruch 6, dadurch gekennzeichnet, daß das Halbleiterbauelement ein SIDAC ist.

10. Energiesparvorrichtung nach Anspruch 6, dadurch gekennzeichnet, daß das Halbleiterbauelement eine Diode (D) ist.

11. Energiesparvorrichtung nach Anspruch 7, dadurch gekennzeichnet, daß das Filter mindestens einen Kondensator (C1; C2) enthält.

12. Energiesparvorrichtung nach Anspruch 1, dadurch gekennzeichnet, daß der Gewindeabschnitt (2, 4) einem Gewindeteil der Glühlampe (L) entspricht, mit Anschlüssen für zwei Leiter (16, 18) versehen ist, die an die Spannungsverminderungsschaltung (6) angeschlossen sind, und der Fassungsabschnitt (12, 14) zwei Anschlußkontakte (8, 10) für die Glühlampe (L) aufweist, die mit der Spannungsverminderungsschaltung (6) verbunden sind.

13. Energiesparvorrichtung nach Anspruch 12, dadurch gekennzeichnet, daß der Fassungsabschnitt (12, 14) an einem Ende im Querschnitt konisch erweitert ist.

14. Energiesparvorrichtung nach einem der vorhergehenden Ansprüche, dadurch gekennzeichnet, daß die Spannungsverminderungsschaltung (6, 6') innerhalb des Gewindeabschnitts (2, 4; 2', 4') angeordnet ist.

15. Energiesparvorrichtung nach einem der vorhergehenden Ansprüche, dadurch gekennzeichnet, daß der Gewindeabschnitt (2, 4; 2', 4') und der Fassungsabschnitt (12, 14; 12', 14') zusammensteckbar bzw. miteinander verbindbar sind.
